# EUROPEAN PATENT SPECIFICATION

(11) **EP 2 703 270 B1**
(45) Date of publication and mention of the grant of the patent: **03.06.2015**
(21) Application number: 13180616.8
(22) Date of filing: 15.08.2013
(51) Int. Cl.: B62K 5/08, B62K 5/05, B62M 6/40

(54) **Vehicle**
Fahrzeug
Véhicule

(30) Priority: 31.08.2012 JP 2012191548; 26.04.2013 JP 2013094387
(43) Date of publication of application: 05.03.2014
(73) Proprietor: Honda Motor Co., Ltd., Tokyo 107-8556 (JP)
(72) Inventor: Kashiwai, Mikio, Wako-shi, Saitama 351-0193 (JP); Kobayashi, Yoshitaka, Wako-shi, Saitama 351-0193 (JP); Tominaga, Takashi, Wako-shi, Saitama 351-0193 (JP); Watanabe, Takato, Wako-shi, Saitama 351-0193 (JP); Horii, Yoshiyuki, Wako-shi, Saitama 351-0193 (JP); Matsuo, Hisashi, Wako-shi, Saitama 351-0193 (JP)
(74) Representative: Stevens, Jason Paul

(56) References cited:
- WO-A1-99/25602
- WO-A1-2010/029949
- US-A1- 2008 258 416
- US-B1- 7 487 985

## Description

The present invention relates to a vehicle in which a steering handlebar for steering a pair of left and right front wheels is mounted to the upper end of a steering shaft, and the steering shaft is rotatably supported by a head pipe which constitutes part of a body frame.

A three-wheeled vehicle is known from Japanese Patent Laid-Open No. 2010-64560 and its equivalent document WO 2010/029949, on which the preamble of claim 1 is based. A steering handlebar is mounted on the upper end of a steering shaft which is rotatably supported by a head pipe. A lever mounted on the lower end of the steering shaft is steerably supported by a front frame rotatably supported by the head pipe. In addition, the lever is connected via a tie rod to one of a pair of left and right front wheels, which are connected to each other via a connecting rod. A pair of left and right springs for holding the head pipe in a self-standing state is installed between the head pipe and the front frame.

In the three-wheeled vehicle disclosed in Japanese Patent Laid-Open No. 2010-64560 above, the pair of left and right front wheels can be steered in response to the operation of the steering handlebar. In addition, the front frame steerably supporting the pair of left and right front wheels is rotatably supported by the head pipe. Therefore, the vehicle can be turned while banking the head pipe. However, when the vehicle is operatively turned with the head pipe banked, the direction of the force, caused by the banking, applied to the lever mounted to the lower end of the steering shaft is opposite to the operating direction of the steering shaft. Therefore, it is difficult to exhibit sufficient turning performance.

The present invention has been made in view of this prior art, and it is an aim of at least the preferred embodiments to enable satisfactory turn through the banking of a vehicle body to allow for satisfactory steering in response to operation, in a vehicle such as a three- or four-wheeled vehicle or the like having two steerable front wheels.

According to a first aspect of the present invention, there is provided a vehicle in which a steering handlebar for steering a pair of left and right front wheels is mounted to an upper end of a steering shaft and the steering shaft is turnably supported by a head pipe constituting part of a body frame; wherein the body frame includes a front frame extending forward from the head pipe; an inner tube of a bush formed by connecting the inner tube with an outer tube surrounding the inner tube via an elastic member is supported at a laterally central portion of the front frame, the inner tube having a generally vertically extending central axis; a pair of laterally extending left and right steering arms have laterally inner end portions secured to the outer tube; a pair of left and right knuckles individually and pivotally supporting the pair of respective left and right front wheels are steerably supported by the corresponding knuckle support portions installed at corresponding laterally outer end portions of the pair of left and right steering arms; a first lever is connected via a connecting rod to a second lever mounted to an upper end portion of a sub-steering shaft turnably passing through the inner tube, the first lever being mounted to a lower end portion of the steering shaft so as to be turned together with the steering shaft; a third lever installed at a lower end portion of the sub-steering shaft is connected to the pair of left and right knuckles via corresponding individual tie rods; and a rod which is incapable of extension and contraction has one end connected via a universal joint to a fourth lever secured to a rear portion of the outer tube and its other end connected to the body frame via another universal joint.

With this arrangement, when the steering handlebar is operated, the turning of the steering shaft is transmitted to the pair of left and right knuckles via the first lever, the connecting rod, the sub-steering shaft, the second lever and the pair of corresponding left and right tie rods. The front wheels pivotally supported by the pair of the left and right knuckles are steered. If an occupant intends to bank the vehicle body toward the inside of the turn, the force on the side of turning toward the inside of the turn is applied to the outer tube of the bush via the rod. The force on the side of turning toward the inside of the turn is applied from the outer tube to the pair of left and right knuckles via the pair of corresponding left and right steering arms. Therefore, the direction of the force applied by the banking is the same as the operating direction of the steering shaft. Thus, sufficient turning performance can be exhibited.

Preferably, the front frame includes a pair of left and right first frame portions connected to lower side portions of the head pipe and extending downward; a pair of left and right second frame portions disposed below respective axes of axles of the front wheels and extending forward from corresponding lower ends of the first frame portions; a pair of left and right third frame portions disposed in front of the steering arms and extending upward from the corresponding front ends of the second frame portions; and a pair of left and right fourth frame portions disposed at respective positions higher than the corresponding respective axes of the axles and extending laterally inward from the corresponding upper ends of the pair of left and right third frame portions; and the front frame is formed in a symmetrical shape with respect to a longitudinally extending vertical plane which passes a central axis of the steering shaft.

Thus, the front frame can be compactly configured by surrounding the steering mechanism including the bush.

Preferably, a U-shaped bracket, open toward the rear of the vehicle body, is supported by a laterally central portion of a front end of the front frame, and the inner tube of the bush is secured to the bracket.

In this way, the inner tube of the bush composed with the elastic member interposed between the inner tube and the outer tube can be compactly secured to the body frame.

Preferably, a single rear wheel driven by an electric motor is suspended by the body frame, which has a seat tube extending vertically so as to support an occupant's seat on which an occupant sits, and a battery for supplying electric power to the electric motor is disposed on the seat tube or the head pipe.

With this arrangement, the battery can be compactly disposed while avoiding enlargement of the vehicle resulting from the disposition of the battery.

Preferably, a damper mechanism is disposed between the bracket and the front frame.

With this arrangement, it is possible to effectively prevent the vibration on the vehicle body side during travel of the vehicle from being transmitted to the steering handlebar, in addition to the damping effect of the bush.

In a preferred form, a pair of left and right folding auxiliary wheels are turnably supported at the rear portion of the body frame in such a manner as to be brought into contact with the ground at a position to the rear of the rear wheel in a used state thereof.

Thus, the vehicle can travel in a stable manner and the auxiliary wheels can contribute to the stabilization of the vehicle body posture particularly during travel on a slope or the like.

In a preferred form, the body frame includes the head pipe; a main frame extending rearward from the head pipe; the seat tube installed upright at a longitudinally intermediate portion of the main frame; and a suspending frame connecting an intermediate portion of the seat tube with a rear end portion of the main frame; a step floor for the feet of an occupant sitting on the occupant's seat is secured onto the main frame in such a manner that the step floor is at least partially disposed in front of the seat tube, and the rear wheel is rotatably supported at a portion between the rear end portion of the main frame and the suspending frame.

With this arrangement, the body frame can be formed compactly so as to be suitable for vehicles having two front wheels, the feet of the occupant sitting on the occupant's seat can stably be put on the step floor, and the rear wheel can pivotally be supported in a stable manner.

In a preferred form, a first swinging point about which the head pipe can be swung is set at the front portion of the main frame; a second swinging point about which an upper portion of the seat tube including the occupant's seat can be swung is set at an intermediate portion of the seat tube; a sub-frame extending parallel to a straight line connecting the first and second swinging points has one end turnably connected to the head pipe or the main frame via a connecting pin and the other end turnably connected to the seat tube via a connecting pin, the connecting pins having axes parallel to the swing axes of the first and second swinging points; and a portion of the body frame and the sub-frame constitute a parallel link.

According to this arrangement, the head pipe and the occupant's seat can be tilted back and forth during travel on an inclined road surface such as a slope or the like, whereby the riding posture can be maintained.

In a further preferred form, the parallel link is provided with a suspension.

Thus, while maintaining a basic framework of the parallel link, the suspension installed on the parallel link can absorb vibration by deforming the frame formation when a given load is applied thereto.

In a further preferred form, the suspension is installed between one end portion of the sub-frame and one of the first and second swinging points so as to be located on one diagonal line of the parallel link.

This allows for an effective arrangement of the suspension.

Incidentally, a saddle 11 of the embodiments corresponds to the occupant's seat of the present invention. A rubber member 39 of the embodiments corresponds to the elastic member of the present invention. Fifth and sixth universal joints 68, 69 of the embodiments correspond to the universal joints of the present invention.

Preferred embodiments of the invention will now be described by way of example only and with reference to the accompanying drawings, in which:
Fig. 1 is a left side view of a three-wheeled vehicle according to a first embodiment;
Fig. 2 is a perspective view of the three-wheeled vehicle as viewed from behind and to the left;
Fig. 3 is a view taking along arrow 3 in Fig. 1;
Fig. 4 is a view taken along arrow 4 in Fig. 1;
Fig. 5 is a cross-sectional view taken along line 5-5 in Fig. 3;
Fig. 6 is a perspective view of the three-wheeled vehicle, corresponding to Fig. 2, showing the auxiliary wheels brought into contact with the ground;
Fig. 7 is a left side view of a three-wheeled vehicle according to a second embodiment;
Fig. 8 is a partially cross-sectional left side view of a third embodiment;
Fig. 9 is a partially cross-sectional left side view of a fourth embodiment, corresponding to Fig. 8; and
Fig. 10 is a cross-sectional view of a fifth embodiment, corresponding to Fig. 5.

Embodiments of the present invention now will be described with reference to the accompanying drawings. The terms "front", "rear" or "back", "left" and "right", and "up" and "down" in the following description should be interpreted with reference to an occupant riding on the vehicle.

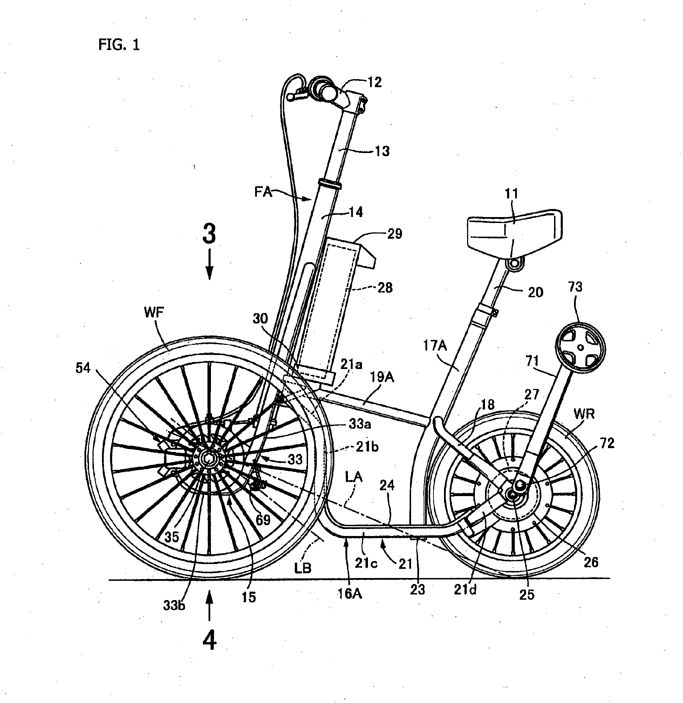

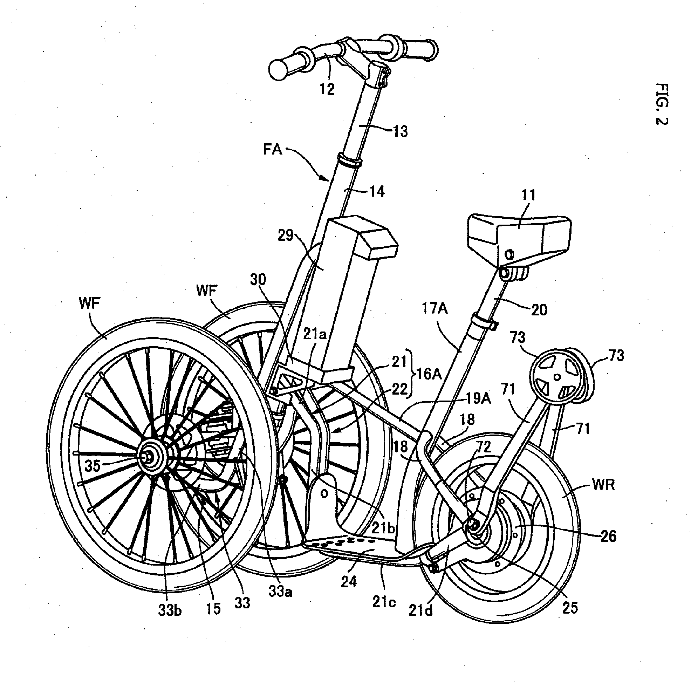

A first embodiment of the present invention is described with reference to Figs. 1 to 6. Referring first to Figs. 1 to 4, a vehicle is a three-wheeled vehicle having two front wheels WF, WF steered by an occupant who sits on a saddle 11 as an occupant's seat and operates a steering handlebar 12. A body frame FA of the vehicle includes a head pipe 14 which rotatably supports a steering shaft 13 having an upper end to which the steering handlebar 12 is mounted; a front frame 15 extending forward from the head pipe 14; a main frame 16A extending rearward from the head pipe 14; a seat tube 17A installed upright at a longitudinally intermediate portion of the main frame 16A; a pair of left and right suspending frames 18, 18 connecting the intermediate portion of the seat tube 17A with the rear end portion of the main frame 16A; and a sub-frame 19A installed between the intermediate portion of the head pipe 14 and the intermediate portion of the seat tube 17A. A seat post 20 having the saddle 11 at its upper end is fixedly inserted into the seat tube 17A, and the insertion length of the seat post 20 into the seat tube 17A can be adjusted to adjust the height of the saddle.

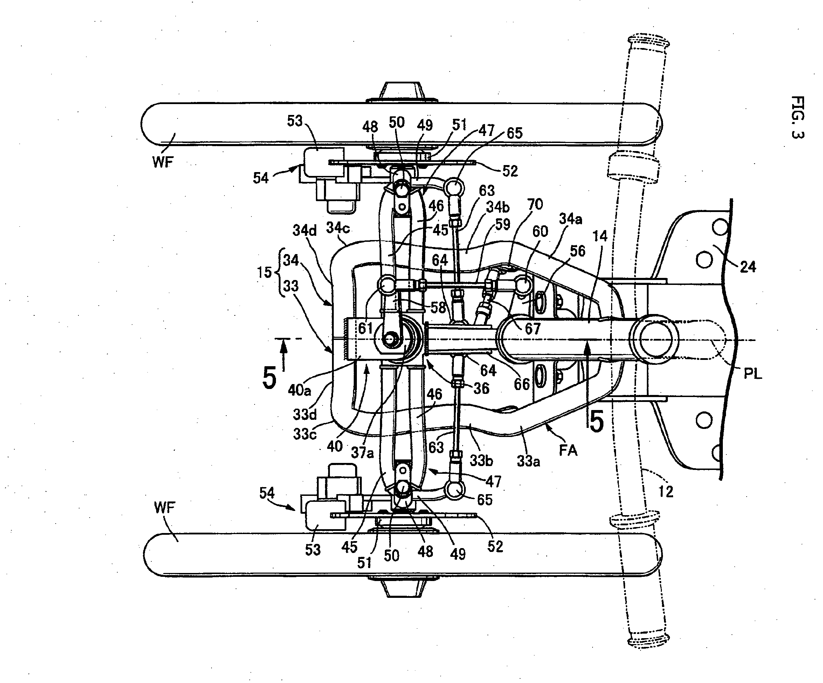

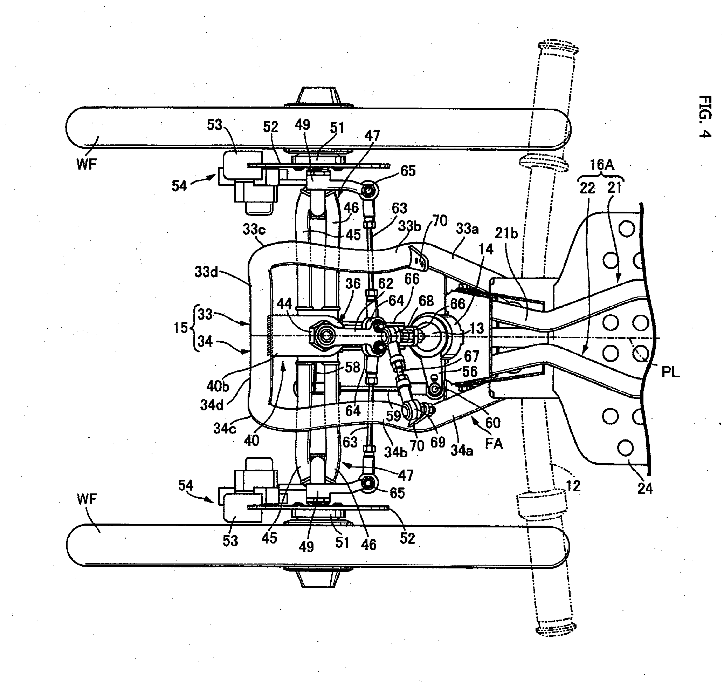

The main frame 16A is composed of a pair of left and right (first and second) frame pipes 21, 22 having respective front ends connected to the rear portion of the head pipe 14. The first frame pipe 21 is formed in a curve and integrally includes a first front inclined portion 21a, a second front inclined portion 21b, an intermediate horizontal portion 21 c and a rear inclined portion 21 d. The first front inclined portion 21a is inclined rearward and downward from the intermediate portion of the head pipe 14 and extends rearwardly therefrom. The second front inclined portion 21b extends rearward and downward from the rear end of the first front inclined portion 21a at an inclination angle steeper than that of the first front inclined portion 21a. The intermediate horizontal portion 21c extends horizontally toward the rear from the rear end of the second front inclined portion 21 b. The rear inclined portion 21 d extends rearward and upward from the rear end of the intermediate horizontal portion 21c. The second frame pipe 22 is formed so as to be symmetrical with the first frame pipe 21 with respect to a longitudinally extending vertical plane PL (see Figs. 3 and 4) which passes through a central axis of the head pipe 14 and the steering shaft 13. The first and second frame pipes 21, 22 have respective rear ends arranged to hold a single rear wheel WR from both sides. The pair of left and right suspending frames 18 have respective rear ends connected to the corresponding rear ends of the first and second frame pipes 21, 22.

The seat tube 17A has a lower end secured to a cross member 23 (see Fig. 1) installed between the first and second frame pipes 21, 22 at a position corresponding to the rear portion of the intermediate horizontal portion 21c of the first frame pipe 21. In addition, the seat tube 17A is installed upright so as to be slightly inclined rearward and upward from the longitudinally intermediate portion of the main frame 16A in such a manner as above.

A step floor 24, on which an occupant sitting on the saddle 11 can place his or her feet, is secured onto the first and second frame pipes 21, 21 of the main frame 16A at a position corresponding to the intermediate horizontal portion 21c of the first pipe 21, in such a manner that the step floor 24 is at least partially disposed in front of the seat tube 17A.

An axle 25 of the rear wheel WR is rotatably supported between the rear end portion of the main frame 16A, that is, the rear end portions of the first and second frame pipes 21, 22 and the corresponding suspending frames 18. Additionally, an electric motor 27 (see Fig. 1) generating power for driving the rear wheel WR is housed in a wheel 26 of the rear wheel WR.

A battery 28 for supplying electric power to the electric motor 27 is disposed on the seat tube 17A or the head pipe 14, (on the head pipe 14 in the first embodiment). More specifically, a battery cradle 30 is installed on the lower rear surface of the head pipe 14. A battery box 29 incorporating the battery 28 is disposed on the head pipe 14 so as to be supported by the battery cradle 30. A control unit adapted to control the operation of the electric motor 27 may be housed in the battery box 29.

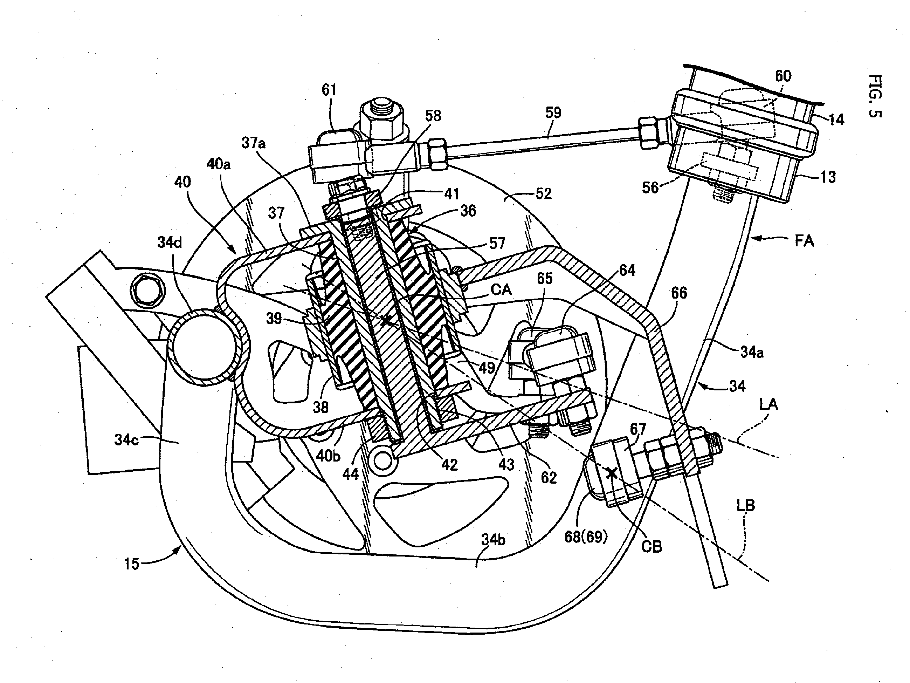

With additional reference to Fig. 5, the front frame 15 is composed of a pair of left and right frame members 33, 34 connected to lower side portions of the head pipe 14. Both the frame members 33, 34 are formed by bending a pipe. In addition, both the frame members 33, 34 integrally include respective first frame portions 33a, 34a, respective second frame portions 33b, 34b, respective third frame portions 33c, 34c, and respective fourth frame portions 33d, 34d. The first frame portions 33a, 34a are connected to the lower side portions of the head pipe 14 and extend downward. The second frame portions 33b, 34b are disposed below the respective axes of the axles 35 of the front wheels WF and extend forward from the corresponding lower ends of the first frame portions 33a, 34a. The third frame portions 33c, 34c extend upward from the corresponding front ends of the second frame portions 33b, 34b. The fourth frame portions 33d, 34d are disposed at respective positions higher than the corresponding respective axes of the axles 35 of the front wheels WF and extend laterally inward from the corresponding upper ends of the third frame portions 33c, 34c. Both the frame members 33, 34 are formed in a symmetrical shape with respect to the longitudinally extending vertical plane PL which passes the central axes of the head pipe 14 and the steering shaft 13. Additionally, the pair of left and right fourth frame portions 33d, 34d in the present embodiment have respective laterally inner end portions butted to and joined to each other.

An inner tube 37 of a bush 36 is supported at the laterally central portion of the front frame 15. The bush 36 is formed such that the inner tube 37 and an outer tube 38 surrounding the inner tube 37 are connected via a rubber member 39 as an elastic member. The inner tube 37 has a central axis which extends generally vertically but is slightly inclined forward and upward.

A U-shaped bracket 40, opening toward the rear of the vehicle body, is supported by the laterally central portion of the front end of the front frame 15, that is, by the laterally inner end portions of the pair of left and right fourth frame portions 33d, 34d of the front frame 15. In the present embodiment, the bracket 40 integrally includes an upper plate portion 40a and a lower plate portion 40b which have respective coaxial insertion holes 41, 42, and is secured to the laterally inner end portions of the fourth frame portions 33d, 34d.

The inner tube 37 of the bush 36 is secured to the bracket 40. More specifically, the inner tube 37 is inserted into the respective insertion holes 41, 42 of the upper plate portion 40a and the lower plate portion 40b of the bracket 40, and is integrally provided with a flange 37a at its upper end. The flange 37a overlaps the upper plate portion 40a from above. An external thread 43 is formed on the outer surface of a portion of the inner tube 37 which projects from the lower plate portion 40b. The lower plate portion 40b comes into contact, from below, with the lower end of the rubber member 39 of the bush 36. A nut 44 to be screwed to the external thread 43 is fastened and is brought into engagement and contact with the lower surface of the lower plate portion 40b. In this way, the inner tube 37 is secured to the bracket 40.

A pair of left and right steering arms 47, 47 is secured to the outer tube 38 of the bush 36 at their respective laterally inner end portions. The steering arms 47, 47 are each composed of a pair of front and rear pipes 45, 46 and extend in the lateral direction of the vehicle. The steering arms 47, 47 are provided with respective cylindrical knuckle support portions 48, 48 at their laterally outer end portions. A pair of left and right knuckles 49, 49, which individually and pivotally support the pair of left and right front wheels WF, WF, are steerably supported by the corresponding knuckle support portions 48 via kingpins 50, 50. In this way, the steering arms 47 are disposed behind the third frame portions 33c, 34d of the front frame 15. The third frame portions 33c, 34d are disposed forward of the corresponding steering arms 47 so as to extend upward from the corresponding front ends of the second frame portions 33b, 34b.

Incidentally, disk brakes 54, 54 are each attached to a corresponding one of the pair of left and right front wheels WF, WF. The disk brakes 54, 54 have respective brake disks 52, 52 attached to respective wheels 51, 51 of the front wheels WF, WF and respective calipers 53, 53. The calipers 53, 53 are supported by the corresponding knuckles 49, 49 so as to straddle the corresponding brake disks 52, 52.

A first lever 56, which turns together with the steering shaft 13, is mounted to the lower end portion of the steering shaft 13 passing through the head pipe 14. A second lever 58 is mounted to the upper end portion of the sub-steering shaft 57 which turnably extends through the inner tube 37 of the bush 36. A connecting rod 59 has one end connected to the first lever 56 via a first universal joint 60, and another end connected to the second lever 58 via a second universal joint 61.

A third lever 62 is installed at the lower end portion of the sub-steering shaft 57. A pair of left and right tie rods 63, 63 individually corresponding to the pair of left and right front wheels WF have respective one end portions connected to the third lever 62 via corresponding third universal joints 64, 64. Both the tie rods 63, 63 have their respective other ends connected to the pair of respective left and right knuckles 49, 49 via corresponding fourth universal joints 65, 65.

A fourth lever 66 is secured to the rear portion of the outer tube 38. A rod 67, which is incapable of extension and contraction, has one end connected to the fourth lever 66 via a fifth universal joint 68 and the other end connected to the body frame FA via a sixth universal joint 69. In this way, in the present embodiment, the rod 67 is connected at both its ends to the fourth lever 66 via the fifth universal joint 68 and to a support plate 70 secured to the right second frame portion 34 of the front frame 15 of the body frame FA via the sixth universal joint 69.

Additionally, as shown in Figs. 1 and 5, the sixth universal joint 69 is disposed below an imaginary vehicle body swing axis LA (relative to the ground surface) in such a manner that the imaginary vehicle body swing axis LA intersects with an imaginary arm swing axis LB (relative to the ground) as viewed in side elevation. The imaginary vehicle body swing axis LA connects a swing centre of the steering arms 47, 47 (that is, a centre CA of the bush 36), with a ground contacting point of the rear wheel WR. The imaginary arm swing axis LB connects a centre CB of the sixth universal joint 69 with the swing centre CA of the steering arms 47, and is inclined at a steeper angle than the imaginary vehicle body swing axis LA. The sixth universal joint 69 is installed between the rod 67 and the body frame FA so as to transmit the tilting movement of the vehicle body to the fourth lever 66.

A pair of left and right auxiliary wheel support arms 71, 71 are turnably supported at first ends thereof by the rear portion of the main frame 16A of the body frame FA my means of corresponding support shafts 72. Auxiliary wheels 73, 73 are rotatably supported at the second ends of the auxiliary wheel support arms 71, 71.

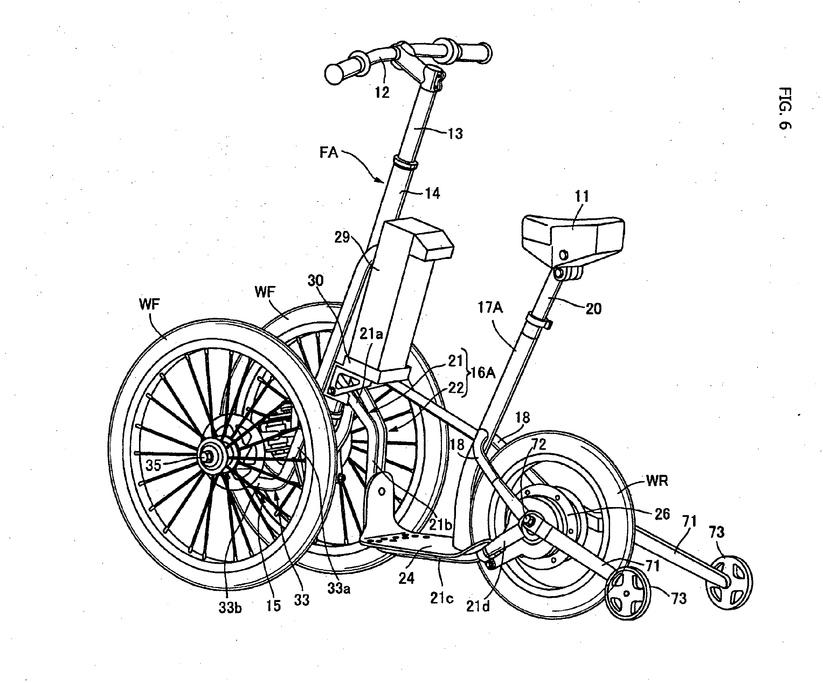

Additionally, the auxiliary wheel support arms 71 can be turned between a non-use position, where the auxiliary wheels 72 are arranged above the rear wheel WR as shown in Fig. 1, and a use position, where the auxiliary wheels 72 are in contact with the ground at a position to the rear of the rear wheel WR as shown in Fig. 6. The auxiliary wheel support arms 71, 71 can be fixedly held in both the use and the non-use positions.

The auxiliary wheel support arms 71 are movably supported by the rear portion of the main frame 16A in such a manner that the auxiliary wheels 73 are brought close to each other in the non-use position. Thus, it is possible to reduce the lateral protrusion of the auxiliary wheels 73 from the vehicle body.

A description will now be given of the operation of the first embodiment. The body frame FA has the front frame 15 extending forward from the head pipe 14. The inner tube 37 of the bush 36 formed by connecting the inner tube 37 having the generally vertically extending central axis with the outer tube 38 surrounding the inner tube 37 via the rubber member 39 is supported at the laterally central portion of the front frame 15. The laterally inner end portions of the pair of laterally extending left and right steering arms 47 are secured to the outer tube 38. The pair of left and right knuckles 49 individually and pivotally supporting the pair of left and right front wheels WF are steerably supported by the corresponding knuckle support portions 48 installed at the laterally outer end portions of the pair of left and right steering arms 47. The first lever 56 is mounted to the lower end portion of the steering shaft 13 so as to be turned together with the steering shaft 13. In addition, the first lever 56 is connected via the first and second universal joints 60, 61 and the connecting rod 59 to the second lever 58 mounted to the upper end portion of the sub-steering shaft 57 turnably passing through the inner tube 37. The third lever 62 installed at the lower end portion of the sub-steering shaft 57 is connected to the pair of left and right knuckles 49 via the corresponding individual tie rods 63, and the corresponding third and fourth universal joints 64, 65. The rod 67 which is incapable of extension and contraction has one end connected via the fifth universal joint 68 to the fourth lever 66 secured to the rear portion of the outer tube 38 and its other end connected to the body frame FA via the sixth universal joint 69.

In this way, when the steering handlebar 12 is operated, the turning of the steering shaft 13 is transmitted to the pair of left and right knuckles 49 via the first lever 56, the connecting rod 59, the sub-steering shaft 57, the second lever 58 and the pair of corresponding left and right tie rods 63. The front wheels WF pivotally supported by the pair of the left and right knuckles 49 are steered. Thus, steering stability similar to that of a four-wheeled vehicle can be obtained. In addition, even if an occupant gets off the vehicle and releases her or his hands from the steering handlebar 12, a self-standing state of the vehicle can be maintained.

If the occupant intends to bank the vehicle body toward the inside of the turn, the force on the side of turning toward the inside of the turn is applied to the outer tube 38 of the bush 36 via the rod 67. The force on the side of turning toward the inside of the turn is applied from the outer tube 38 to the pair of left and right knuckles 49 via the corresponding left and right steering arms 47. Therefore, the direction of the force applied by the banking is the same as the operating direction of the steering shaft 13. Thus, sufficient turning performance can be exhibited.

Additionally, the sixth universal joint 69 is disposed below the imaginary vehicle body swing axis LA in such a manner that the imaginary vehicle body swing axis LA (relative to the ground) intersects with the imaginary arm swing axis LB (relative to the ground) as viewed in side elevation. The imaginary vehicle body swing axis LA connects the swing centre CA of the steering arms 47, 47 with the ground contacting point of the rear wheel WR. The imaginary arm swing axis LB connects the centre CB of the sixth universal joint 69 with the swing centre CA of the steering arms 47 and is inclined at a steeper angle than the imaginary vehicle body swing axis LA. The sixth universal joint 69 is installed between the rod 67 and the body frame FA so as to transmit the tilting movement of the vehicle body to the fourth lever 66. In this way, if the occupant intends to bank the vehicle body toward the inside of the turn, the force on the side of turning toward the inside of the turn is reliably applied to the outer tube 38 of the bush 36. Therefore, the direction of the force applied by the banking of the vehicle body is positively allowed to coincide with the operating direction of the steering shaft 13. Thus, more sufficient turning performance can be exhibited.

The front frame 15 includes the pair of left and right first frame portions 33a, 34a connected to the lower side portions of the head pipe 14 and extending downward; the pair of left and right second frame portions 33b, 34b disposed below the respective axes of the axles 35 of the front wheels WF and extending forward from the corresponding lower ends of the first frame portions 33a, 34a; the pair of left and right third frame portions 33c, 34c disposed in front of the steering arms 47 and extending upward from the corresponding front ends of the second frame portions 33b, 34b; and the pair of left and right fourth frame portions 33d, 34d disposed at respective positions higher than the corresponding respective axes of the axles 35 and extending laterally inward from the corresponding upper ends of the pair of left and right third frame portions 33c, 34c. The front frame 15 is formed in a symmetrical shape with respect to the longitudinally extending vertical plane PL which passes through the central axis of the steering shaft 13. Thus, the front frame 15 can be formed compactly so as to surround the steering mechanism including the bush 36.

The U-shaped bracket 40 which opens toward the rear of the vehicle body is supported at the laterally central portion of the front end of the front frame 15. In addition, the inner tube 37 of the bush 36 is secured to the bracket 40. The inner tube 37 of the bush 36 formed with the rubber member 39 interposed between the inner tube 37 and the outer tube 38 can be compactly secured to the body frame FA.

The single rear wheel WR driven by the electric motor 27 is suspended by the body frame FA. In addition, the battery 28 for supplying electric power to the electric motor 27 is disposed on the head pipe 14. Therefore, the battery 28 can be compactly disposed while avoiding the enlargement of the vehicle resulting from the disposition of the battery 28.

The pair of left and right folding auxiliary wheels 73 are turnably supported at the rear portion of the body frame FA in such a manner as to be brought into contact with the ground at a position to the rear of the rear wheel WR in their used state. Therefore, the vehicle can travel stably and the auxiliary wheels can contribute to the stabilization of the vehicle body posture, particularly during inclined travel on a slope or the like.

The body frame FA includes the head pipe 14, the main frame 16A extending rearward from the head pipe 14, the seat tube 17A installed upright at the longitudinally intermediate portion of the main frame 16A, and the suspending frames 18, 18 connecting the intermediate portion of the seat tube 17A with the rear end portion of the main frame 16A. The step floor 24 for the feet of an occupant sitting on the saddle 11 is secured onto the main frame 16A in such a manner that the step floor 24 is at least partially disposed in front of the seat tube 17A. The rear wheel WR is rotatably supported at the portion between the rear end portion of the main frame 16A and the corresponding suspending frames 18, 18. Therefore, the feet of the occupant sitting on the saddle 11 can stably be put on the step floor 21c and the rear wheel WR can be pivotally supported in a stable manner.

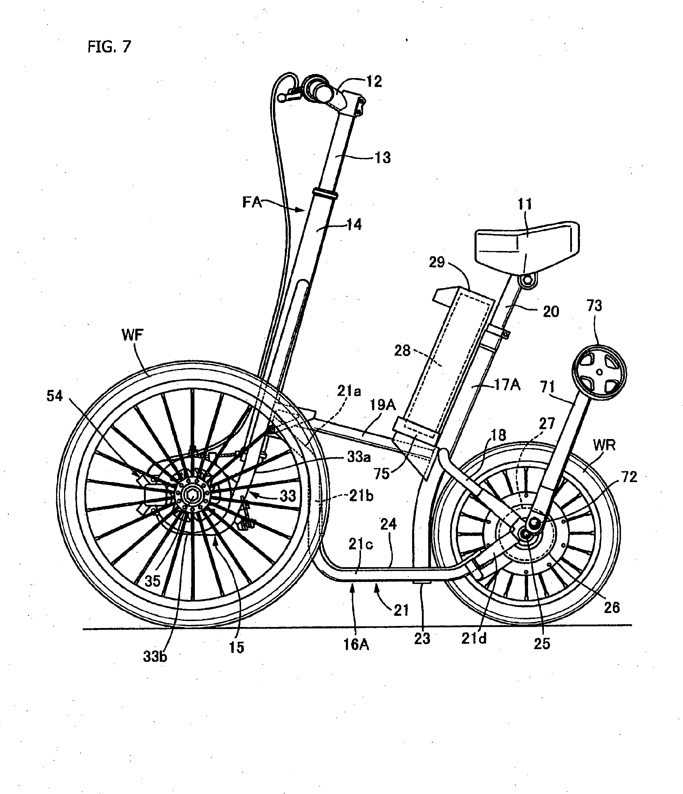

A second embodiment of the present invention will now be described with reference to Fig. 7. A battery 28 for supplying electric power to an electric motor for driving a rear wheel WR is disposed on a seat tube 17A constituting part of a body frame FA.

More specifically, a battery cradle 75 is installed on the lower front surface of the front seat tube 17A. A battery box 29 incorporating the battery 28 is disposed on the seat tube 17A so as to be supported by the battery cradle 75.

According to the second embodiment, the battery 28 can be compactly disposed while avoiding the enlargement of the vehicle resulting from the disposition of the battery 28. In addition, the battery 28 is disposed at a position closer to the electric motor 27 than that of the first embodiment. Therefore, wiring can be shortened.

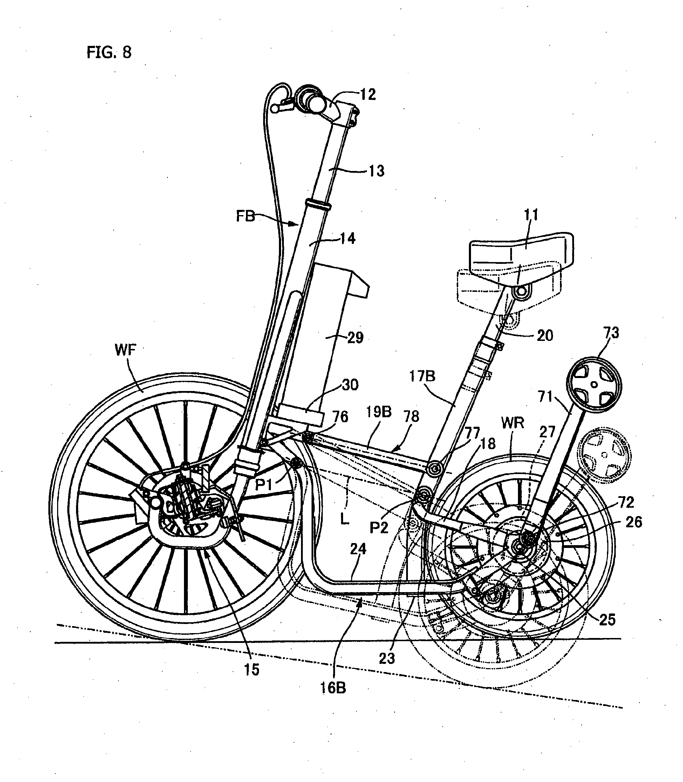

A third embodiment of the present invention will now be described with reference to Fig. 8. A body frame FB includes a head pipe 14; a front frame 15 extending forward from the head pipe 14; a main frame 16B extending rearward from the head pipe 14; a seat tube 17B installed upright at an longitudinally intermediate portion of the main frame 16B; a pair of left and right suspending frames 18, 18 connecting the intermediate portion of the seat tube 17B with the rear end portion of the main frame 16B; and a sub-frame 19B installed between the intermediate portion of the head pipe 14 and the intermediate portion of the seat tube 17B. A seat post 20 having the saddle 11 at its upper end is fixedly inserted into the seat tube 17B, and the insertion length of the seat post 20 into the seat tube 17B can be adjusted to adjust the height of the saddle.

A first swinging point P1 is set at the front portion of the main frame 16B. A portion of the main frame 16B forward of the first swinging point P1 and the head pipe 14 can swing around the first swinging point P1. A swinging point P2 is set at the intermediate portion of the seat tube 17B at a position above the portion of the suspending frame 18. A portion of the seat tube 17B above the second swinging point P2 and a seat post 20 on which a saddle 11 is installed at its upper end can swing around the second swinging point P2.

The sub-frame 19B extends parallel to a straight line L connecting the first and second swinging points P1, P2 together. The sub-frame 19B has one end turnably connected to the head pipe 14 or the main frame 16B (the head pipe 14 in the third embodiment) via a connecting pin 76 and the other end turnably connected to the seat tube 17B via a connecting pin 77. The connecting pins 76, 77 have axes parallel to the swing axes of the first and second swinging points P1, P2.

In this way, a portion of the body frame FB and the sub-frame 19B form a parallel link 78. In the third embodiment, a portion of the main frame 16B of the body frame FB, a portion of the head pipe 14 and a portion of the seat tube 17B constitute the parallel link 78.

The postures of a portion of the main frame 16B forward of the first swinging point P1 and the head pipe 14, and the postures of a portion of the seat tube 17B above the second swinging point P2 and the seat post 20 including the saddle 11, are maintained by frictional forces at the first and second swinging points P1, P2. The postures can be changed by the application of a load greater than the frictional forces.

According to the third embodiment, the head pipe 14 and the saddle 11 can be tilted back and forth during travel on an inclined road surface such as a slope or the like, whereby a riding posture can be maintained.

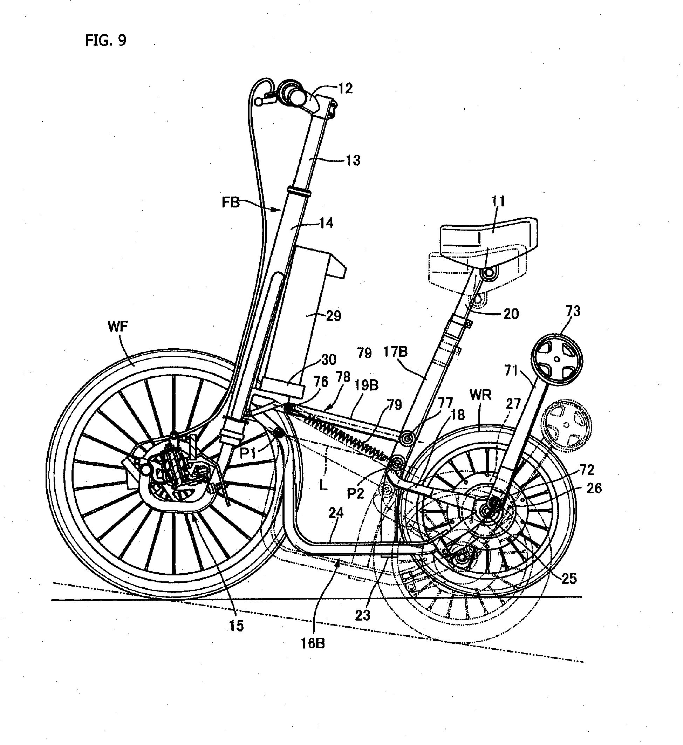

A fourth embodiment of the present invention will now be described with reference to Fig. 9. A parallel link 78 composed of a portion of the body frame FB and the sub-frame 19B is provided with a suspension 79. The suspension 79 is installed between one end portion of the sub-frame 19B and one of the first and second swinging points P1, P2 so as to be located on a diagonal line of the parallel link 78. In this embodiment, the suspension 79 is installed between a connecting pin 76 connecting the one end portion of the sub-frame 19B with the head pipe 14 and the second swinging point P2 located in the intermediate portion of the seat tube 17B.

According to the fourth embodiment, while maintaining a basic framework of the parallel link 78, the suspension 79 installed on the parallel link 78 can absorb vibration by deforming the frame formation when a given load is applied thereto. In addition, the suspension 79 is disposed on a diagonal line of the parallel link 78, which allows for the effective arrangement of the suspension 79.

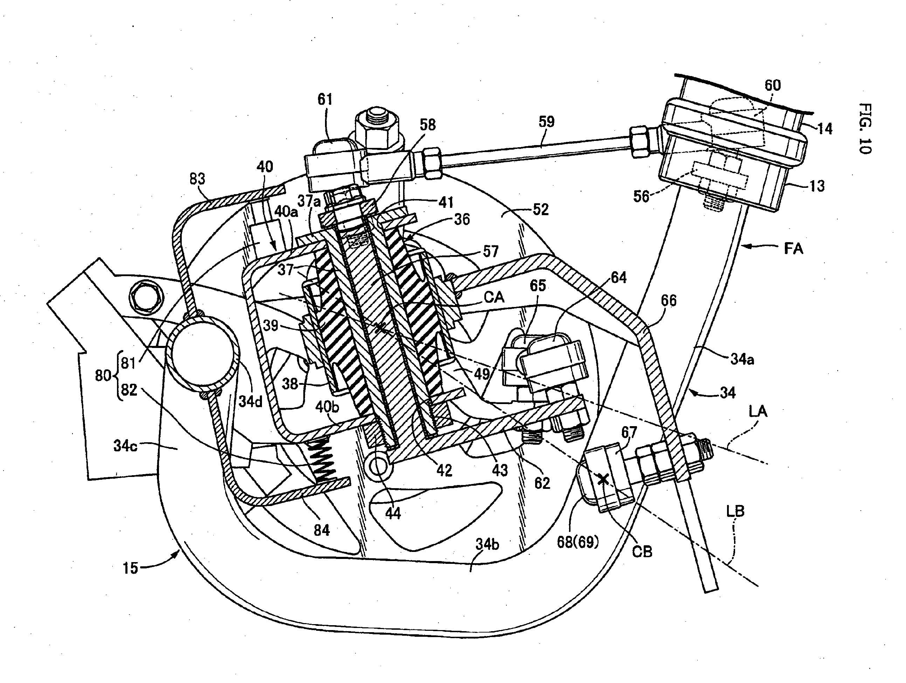

A fifth embodiment of the present invention will now be described with reference to Fig. 10. A damper mechanism 80 is disposed between a laterally central portion of a front frame 15 and the bracket 40 mentioned earlier. The damper mechanism 80 is composed of a hydraulic damper 81 and a spring 82. The hydraulic damper 81 is installed at the laterally central portion of the front frame 15, between an upper support plate 83 disposed above the bracket 40 and the bracket 40. The spring 82 is installed at the laterally central portion of the front frame 15, between a lower support plate 84 disposed below the bracket 40 and the bracket 40.

According to the fifth embodiment, it is possible to effectively suppress the body side vibration applied to the steering handlebar 12 during travelling of the vehicle, in addition to the damping effect of the bush 36.

Preferred embodiments of the present invention have so far been described. However, the present invention is not limited to the above embodiments but can be modified in design in various ways without departing from the scope of the present invention as defined in the claims.

For example, the embodiments described above are such that the rear wheel WR is driven by the electric motor 27. However, the electric motor 27 and the step floor 24 may be omitted, and so the vehicle can be configured as a bicycle or a pedal-driven skater. Alternatively, a motor-assisted bicycle can be configured. The auxiliary wheel support arms 71 and the auxiliary wheels 73 are not essential but can be omitted.

The present invention is not limited to a three-wheeled vehicle with two front wheels, but can also be configured as a four-wheeled vehicle.

## Claims

1. A vehicle in which a steering handlebar (12) for steering a pair of left and right front wheels (WF) is mounted to an upper end of a steering shaft (13) and the steering shaft (13) is turnably supported by a head pipe (14) constituting part of a body frame (FA, FB),
wherein the body frame (FA, FB) includes a front frame (15) extending forward from the head pipe (14),
**characterized in that**
an inner tube (37) of a bush (36) formed by connecting the inner tube (37) with an outer tube (38) surrounding the inner tube (37) via an elastic member (39) is supported at a laterally central portion of the front frame (15), the inner tube (37) having a generally vertically extending central axis,
a pair of laterally extending left and right steering arms (47) have laterally inner end portions secured to the outer tube (38),
a pair of left and right knuckles (49) individually and pivotally supporting the pair of respective left and right front wheels (WF) are steerably supported by the corresponding knuckle support portions (48) installed at corresponding laterally outer end portions of the pair of left and right steering arms (47),
a first lever (56) is connected via a connecting rod (59) to a second lever (58) mounted to an upper end portion of a sub-steering shaft (57) turnably passing through the inner tube (37), the first lever (56) being mounted to a lower end portion of the steering shaft (13) so as to be turned together with the steering shaft (13),
a third lever (62) installed at a lower end portion of the sub-steering shaft (57) is connected to the pair of left and right knuckles (49) via corresponding individual tie rods (63), and
a rod (67) which is incapable of extension and contraction has one end connected via a universal joint (68) to a fourth lever (66) secured to a rear portion of the outer tube (38) and its other end connected to the body frame (FA, FB) via another universal joint (69).

2. The vehicle according to claim 1,
wherein the front frame (15) includes a pair of left and right first frame portions (33a, 34a) connected to lower side portions of the head pipe (14) and extending downward; a pair of left and right second frame portions (33b, 34b) disposed below respective axes of axles (35) of the front wheels (WF) and extending forward from corresponding lower ends of the first frame portions (33a, 34a); a pair of left and right third frame portions (33c, 34c) disposed in front of the steering arms (47) and extending upward from the corresponding front ends of the second frame portions (33b, 34b); and a pair of left and right fourth frame portions (33d, 34d) disposed at respective positions higher than the corresponding respective axes of the axles (35) and extending laterally inward from the corresponding upper ends of the pair of left and right third frame portions (33c, 34c), and
the front frame (15) is formed in a symmetrical shape with respect to a longitudinally extending vertical plane (PL) which passes a central axis of the steering shaft (13).

3. The vehicle according to claim 1 or 2,
wherein a U-shaped bracket (40), open toward the rear of the vehicle body, is supported by a laterally central portion of a front end of the front frame (15), and
the inner tube (37) of the bush (36) is secured to the bracket (40).

4. The vehicle according to any one of claims 1 to 3,
wherein a single rear wheel (WR) driven by an electric motor (27) is suspended by the body frame (FA, FB), which has a seat tube (17A, 17B) extending vertically so as to support an occupant's seat (11) on which an occupant sits, and
a battery (28) for supplying electric power to the electric motor (27) is disposed on the seat tube (17A, 17B) or the head pipe (14).

5. The vehicle according to claim 3 or claim 4 when dependent on claim 3,
wherein a damper mechanism (80) is disposed between the bracket (40) and the front frame (15).

6. The vehicle according to claim 4,
wherein a pair of left and right folding auxiliary wheels (73) are turnably supported at the rear portion of the body frame (FA, FB) in such a manner as to be brought into contact with the ground at a position to the rear of the rear wheel (WR) in a used state thereof.

7. The vehicle according to claim 4,
wherein the body frame (FA) includes the head pipe (14); a main frame (16A, 16B) extending rearward from the head pipe (14); the seat tube (17A, 17B) installed upright at a longitudinally intermediate portion of the main frame (16A, 16B); and a suspending frame (18) connecting an intermediate portion of the seat tube (17A, 17B) with a rear end portion of the main frame (16A, 16B),
a step floor (24) for the feet of an occupant sitting on the occupant's seat (11) is secured onto the main frame (16A, 16B) in such a manner that the step floor (24) is at least partially disposed in front of the seat tube (17A, 17B), and
the rear wheel (WR) is rotatably supported at a portion between the rear end portion of the main frame (16A, 16B) and the suspending frame (18).

8. The vehicle according to claim 4,
wherein a first swinging point (P1) about which the head pipe (14) can be swung is set at the front portion of the main frame (16B),
a second swinging point (P2) about which an upper portion of the seat tube (17B) including the occupant's seat (11) can be swung is set at an intermediate portion of the seat tube (17B),
a sub-frame (19B) extending parallel to a straight line (L) connecting the first and second swinging points (P1, P2) has one end turnably connected to the head pipe (14) or the main frame (16B) via a connecting pin (76) and the other end turnably connected to the seat tube (17B) via a connecting pin (77), the connecting pins (76, 77) having axes parallel to the swing axes of the first and second swinging points (P1, P2), and
a portion of the body frame (FB) and the sub-frame (19B) constitute a parallel link (78).

9. The vehicle according to claim 8,
wherein the parallel link (78) is provided with a suspension (79).

10. The vehicle according to claim 9,
wherein the suspension (79) is installed between one end portion of the sub-frame (19B) and one of the first and second swinging points (P1, P2) so as to be located on one diagonal line of the parallel link (78).

## Patentansprüche

1. Fahrzeug, bei dem eine Lenkstange (12) zum Lenken eines Paares linkem und rechtem Vorderrad (WF) an einem oberen Ende einer Lenkwelle (13) montiert ist, und die Lenkwelle (13) drehbar von einem Lenkkopf (14) gelagert wird, der einen Bestandteil eines Karosserierahmens (FA, FB) bildet,
wobei der Karosserierahmen (FA, FB) einen Vorderrahmen (15) aufweist, der sich von dem Lenkkopf (14) nach vorne erstreckt,
**dadurch gekennzeichnet, dass**
ein Innenrohr (37) einer Buchse (36), die durch Verbinden des Innenrohres (37) mit einem Außenrohr (38), welches das Innenrohr (37) über ein elastisches Element (39) umschließt, ausgebildet wird, an einem seitlichen Mittelabschnitt des Vorderrahmens (15) gelagert wird, wobei das Innenrohr (37) eine sich im Wesentlichen senkrecht erstreckende Mittelachse aufweist,
ein Paar sich seitlich erstreckende linke und rechte Lenkgestänge (47) seitliche innere Endabschnitte aufweist, die an dem Außenrohr (38) sicher befestigt sind,
ein Paar linke und rechte Achsschenkel (49), die einzeln und schwenkbar das Paar des jeweiligen linken und rechten Vorderrads (WF) lagern, durch die entsprechenden Achsschenkelgelenkabschnitte (48) lenkbar sind, die an entsprechenden seitlichen äußeren Endabschnitten des Paares linker und rechter Lenkgestänge (47) installiert sind,
ein erster Hebel (56) über eine Verbindungsstange (59) mit einem zweiten Hebel (58) verbunden ist, der an einem oberen Endabschnitt einer Teillenkwelle (57) montiert ist, die drehbar durch das Innenrohr (37) hindurch geht, wobei der erste Hebel (56) an einem unteren Endabschnitt der Lenkwelle (13) dergestalt montiert ist, dass er zusammen mit der Lenkwelle (13) gedreht wird,
ein dritter Hebel (62), der an einem unteren Endabschnitt der Teillenkwelle (57) installiert ist, mit dem Paar linke und rechte Achsschenkel (49) über entsprechende individuelle Spurstangen (63) verbunden ist, und
ein Ende einer Stange (67), die sich nicht ausdehnen und zusammenziehen kann, an einem Kreuzgelenk (68) mit einem vierten Hebel (66) verbunden ist, der sicher an einem hinteren Abschnitt des Außenrohrs (38) befestigt ist, und ihr anderes Ende an dem Karosserierahmen (FA, FB) über ein anderes Kreuzgelenk (69) verbunden ist.

2. Fahrzeug nach Anspruch 1,
wobei der Vorderrahmen (15) ein Paar linke und rechte erste Rahmenabschnitte (33a, 34a) aufweist, die mit unteren Seitenabschnitten des Lenkkopfes (14) verbunden sind und sich nach unten erstrecken;
ein Paar linke und rechte zweite Rahmenabschnitte (33b, 34b), die unter jeweiligen Achsen von Naben (35) der Vorderräder (WF) angeordnet sind und sich von entsprechenden unteren Enden der ersten Rahmenabschnitte (33a, 34a) nach vorne erstrecken;
ein Paar linke und rechte dritte Rahmenabschnitte (33c, 34c), die vor den Lenkgestängen (47) angeordnet sind und sich nach oben von den entsprechenden vorderen Enden der zweiten Rahmenabschnitte (33b, 34b) erstrecken;
und ein Paar linke und rechte vierte Rahmenabschnitte (33d, 34d), die an jeweiligen Positionen höher als die entsprechenden jeweiligen Achsen der Naben (35) angeordnet sind und sich seitlich nach innen von den entsprechenden oberen Enden des Paares linker und rechter dritter Rahmenabschnitte (33c, 34c) erstrecken, und
der Vorderrahmen (15) in einer symmetrischen Gestalt im Verhältnis zu einer sich längs erstreckenden vertikalen Ebene (PL) ausgebildet ist, die durch eine Mittelachse der Lenkwelle (13) geht.

3. Fahrzeug nach Anspruch 1 oder 2,
wobei ein U-förmiger Bügel (40), der nach oben zur Rückseite der Fahrzeugkarosserie offen ist, durch einen seitlichen Mittelabschnitt eines vorderen Endes des Vorderrahmens (15) gelagert wird, und das Innenrohr (37) der Buchse (36) an dem Bügel (40) sicher befestigt ist.

4. Fahrzeug nach irgendeinem der Ansprüche 1 bis 3,
wobei ein einzelnes Hinterrad (WR), das durch einen Elektromotor (27) angetrieben wird, durch den Karosserierahmen (FA, FB) aufgehängt ist, von dem sich ein Sattelrohr (17A, 17B) dergestalt vertikal erstreckt, dass ein Sitz eines Benutzers (11), auf dem ein Benutzer sitzt, gelagert wird, und
eine Batterie (28) zum Zuführen von elektrischem Strom zu dem Elektromotor (27) an dem Sattelrohr (17A, 17B) oder dem Lenkkopf (14) angeordnet ist.

5. Fahrzeug nach Anspruch 3 oder Anspruch 4, wenn er von Anspruch 3 abhängt, wobei ein Dämpfungsmechanismus (80) zwischen dem Bügel (40) und dem Vorderrahmen (15) angeordnet ist.

6. Fahrzeug nach Anspruch 4,
wobei ein Paar linke und rechte klappbare Hilfsräder (73) drehbar an dem hinteren Abschnitt des Karosserierahmens (FA, FB) dergestalt gelagert sind, dass sie an einer Position zur Rückseite des Hinterrads (WR) im Gebrauchszustand mit dem Boden in Kontakt gebracht werden können.

7. Fahrzeug nach Anspruch 4,
wobei der Karosserierahmen (FA) aufweist, den Lenkkopf (14); einen Hauptrahmen (16A, 16B), der sich nach hinten von dem Lenkkopf (14) erstreckt; das Sattelrohr (17A, 17B), das aufrecht an einem länglichen Zwischenabschnitt des Hauptrahmens (16A, 16B) installiert ist; und einen Schwingrahmen (18), der einen Zwischenabschnitt des Sattelrohrs (17A, 17B) mit einem hinteren Endabschnitt des Hauptrahmens (16A, 16B) verbindet,
ein Trittboden (24) für die Füße eines Benutzers, der auf dem Sitz des Benutzers (11) sitzt, sicher auf dem Hauptrahmen (16A, 16B) dergestalt befestigt ist, dass der Trittboden (24) mindestens teilweise vor dem Sattelrohr (17A, 17B) angeordnet ist, und
das Hinterrad (WR) an einem Abschnitt zwischen dem hinteren Endabschnitt des Hauptrahmens (16A, 16B) und dem Schwingrahmen (18) drehbar gelagert ist.

8. Fahrzeug nach Anspruch 4,
wobei ein erster Schwingpunkt (P1), um welchen der Lenkkopf (14) geschwenkt werden kann, sich an dem vorderen Abschnitt des Hauptrahmens (16B) befindet,
ein zweiter Schwingpunkt (P2), um welchen ein oberer Abschnitt des Sattelrohrs (17B) einschließlich des Sitzes des Benutzers (11) geschwenkt werden kann, sich an einem Zwischenabschnitt des Sattelrohrs (17B) befindet,
ein Ende eines Teilrahmens (19B), der sich parallel zu einer geraden, den ersten und zweiten Schwingpunkt (P1, P2) verbindenden Linie (L) erstreckt, drehbar an dem Lenkkopf (14) oder dem Hauptrahmen (16B) über einen Verbindungsstift (76) verbunden ist, und das andere Ende mit dem Sattelrohr (17B) über einen Verbindungsstift (77) drehbar verbunden ist, wobei die Verbindungsstifte (76, 77) Achsen aufweisen, die parallel zu den Schwingachsen des ersten und zweiten Schwingpunktes (P1, P2) verlaufen, und
ein Abschnitt des Karosserierahmens (FB) und des Teilrahmens (19B) eine parallele Verbindung (78) bilden.

9. Fahrzeug nach Anspruch 8,
wobei an der parallelen Verbindung (78) eine Aufhängung (79) zur Verfügung gestellt ist.

10. Fahrzeug nach Anspruch 9,
wobei die Aufhängung (79) zwischen einem Endabschnitt des Teilrahmens (19B) und entweder dem ersten oder zweiten Schwingpunkt (P1, P2) dergestalt installiert ist, dass sie sich auf einer diagonalen Linie der parallelen Verbindung (78) befindet.

## Revendications

1. Véhicule dans lequel un guidon de direction (12) pour diriger un couple de roues avant gauche et droite (WF) est monté à une extrémité supérieure d'un arbre de direction (13) et l'arbre de direction (13) est supporté de manière à pouvoir tourner par un tube principal (14) constituant une partie d'un cadre structurel (FA, FB),
dans lequel le cadre structurel (FA, FB) inclut un cadre avant (15) s'étendant vers l'avant à partir du tube principal (14),
**caractérisé en ce que**
un tube intérieur (37) d'un manchon (36) formé en reliant le tube intérieur (37) à un tube extérieur (38) entourant le tube intérieur (37) via un élément élastique (39) est supporté au niveau d'une partie latéralement centrale du cadre avant (15), le tube intérieur (37) ayant un axe central s'étendant globalement verticalement,
un couple de bras de direction gauche et droit s'étendant latéralement (47) a des parties d'extrémité latéralement intérieures fixées au tube extérieur (38),
un couple d'articulations gauche et droite (49) supportant individuellement et de manière pivotante le couple de roues avant gauche et droite respectives (WF) est supporté de manière orientable par les parties de support d'articulation correspondantes (48) installées au niveau de parties d'extrémité latéralement extérieures correspondantes du couple de bras de direction gauche et droit (47),
un premier levier (56) est relié via une tige de connexion (59) à un deuxième levier (58) monté à une partie d'extrémité supérieure d'un arbre de direction secondaire (57) passant de manière à pouvoir tourner à travers le tube intérieur (37), le premier levier (56) étant monté à une partie d'extrémité inférieure de l'arbre de direction (13) afin d'être tourné en même temps que l'arbre de direction (13),
un troisième levier (62) installé au niveau d'une partie d'extrémité inférieure de l'arbre de direction secondaire (57) est relié au couple d'articulations gauche et droite (49) via des tirants individuels correspondants (63), et
une tige (67) qui ne peut pas subir d'extension et de contraction a une extrémité reliée via un joint universel (68) à un quatrième levier (66) fixé à une partie arrière du tube extérieur (38) et son autre extrémité reliée au cadre structurel (FA, FB) via un autre joint universel (69).

2. Véhicule selon la revendication 1,
dans lequel le cadre avant (15) inclut un couple de premières parties de cadre gauche et droite (33a, 34a) reliées à des parties latérales inférieures du tube principal (14) et s'étendant vers le bas ; un couple de deuxièmes parties de cadre gauche et droite (33b, 34b) disposées au-dessous d'axes respectifs d'essieux (35) des roues avant (WF) et s'étendant vers l'avant à partir d'extrémités inférieures correspondantes des premières parties de cadre (33a, 34a) ; un couple de troisièmes parties de cadre gauche et droite (33c, 34c) disposées devant les bras de direction (47) et s'étendant vers le haut à partir des extrémités avant correspondantes des deuxièmes parties de cadre (33b, 34b) ; et un couple de quatrièmes parties de cadre gauche et droite (33d, 34d) disposées au niveau de positions respectives plus hautes que les axes respectifs correspondants des essieux (35) et s'étendant latéralement vers l'intérieur à partir des extrémités supérieures correspondantes du couple de troisièmes parties de cadre gauche et droite (33c, 34c), et
le cadre avant (15) est formé en une forme symétrique par rapport à un plan vertical s'étendant longitudinalement (PL) qui passe par un axe central de l'arbre de direction (13).

3. Véhicule selon la revendication 1 ou 2,
dans lequel une patte d'attache en forme de U (40), ouverte vers l'arrière du corps de véhicule, est supportée par une partie latéralement centrale d'une extrémité avant du cadre avant (15), et
le tube intérieur (37) du manchon (36) est fixé à la patte d'attache (40).

4. Véhicule selon l'une quelconque des revendications 1 à 3,
dans lequel une roue arrière unique (WR) entraînée par un moteur électrique (27) est suspendue par le cadre structurel (FA, FB), qui a un tube de selle (17A, 17B) s'étendant verticalement afin de supporter la selle d'un occupant (11) sur laquelle un occupant s'assoit, et
une batterie (28) pour fournir de l'énergie électrique au moteur électrique (27) est disposée sur le tube de selle (17A, 17B) ou le tube principal (14).

5. Véhicule selon la revendication 3 ou la revendication 4 lorsque dépendante de la revendication 3, dans lequel un mécanisme amortisseur (80) est disposé entre la patte d'attache (40) et le cadre avant (15).

6. Véhicule selon la revendication 4,
dans lequel un couple de roues auxiliaires pliantes gauche et droite (73) est supporté de manière à pouvoir tourner au niveau de la partie arrière du cadre structurel (FA, FB) de façon à être mis en contact avec le sol au niveau d'une position à l'arrière de la roue arrière (WR) dans un état utilisé de celle-ci.

7. Véhicule selon la revendication 4,
dans lequel le cadre structurel (FA) inclut le tube principal (14) ; un cadre principal (16A, 16B) s'étendant vers l'arrière à partir du tube principal (14) ; le tube de selle (17A, 17B) installé tout droit au niveau d'une partie longitudinalement intermédiaire du cadre principal (16A, 16B) ; et un cadre de suspension (18) reliant une partie intermédiaire du tube de selle (17A, 17B) à une partie d'extrémité arrière du cadre principal (16A, 16B),
un marchepied (24) pour les pieds d'un occupant assis sur la selle de l'occupant (11) est fixé sur le cadre principal (16A, 16B) de telle sorte que le marchepied (24) est au moins partiellement disposé devant le tube de selle (17A, 17B), et
la roue arrière (WR) est supportée en rotation au niveau d'une partie entre la partie d'extrémité arrière du cadre principal (16A, 16B) et le cadre de suspension (18).

8. Véhicule selon la revendication 4,
dans lequel un premier point d'oscillation (P1) autour duquel le tube principal (14) peut être oscillé est positionné au niveau de la partie avant du cadre principal (16B),
un second point d'oscillation (P2) autour duquel une partie supérieure du tube de selle (17B) incluant la selle de l'occupant (11) peut être oscillée est positionné au niveau d'une partie intermédiaire du tube de selle (17B),
un cadre secondaire (19B) s'étendant parallèlement à une ligne droite (L) reliant les premier et second points d'oscillation (P1, P2) a une extrémité reliée de manière à pouvoir tourner au tube principal (14) ou au cadre principal (16B) via un ergot de connexion (76) et l'autre extrémité reliée de manière à pouvoir tourner au tube de selle (17B) via un ergot de connexion (77), les ergots de connexion (76, 77) ayant des axes parallèles aux axes d'oscillation des premier et second points d'oscillation (P1, P2), et
une partie du cadre structurel (FB) et du cadre secondaire (19B) constitue une liaison parallèle (78).

9. Véhicule selon la revendication 8,
dans lequel la liaison parallèle (78) est munie d'une suspension (79).

10. Véhicule selon la revendication 9,
dans lequel la suspension (79) est installée entre une partie d'extrémité du cadre secondaire (19B) et un des premier et second points d'oscillation (P1, P2) afin d'être situé sur une ligne diagonale de la liaison parallèle (78).
